# EUROPÄISCHE PATENTSCHRIFT

(11) **EP 0 824 640 B1**
(45) Veröffentlichungstag und Bekanntmachung des Hinweises auf die Patenterteilung: **22.07.1998**
(21) Anmeldenummer: 96907283.4
(22) Anmeldetag: 27.03.1996
(51) Int. Cl.: F16H 1/46

(54) **ZWEISTUFIGES PLANETENZAHNRADGETRIEBE**
TWO-STAGE PLANET GEAR TRANSMISSION
BOITE A SATELLITES PLANETAIRES A DEUX ETAGES

(30) Priorität: 09.05.1995 DE 19516420
(43) Veröffentlichungstag der Anmeldung: 25.02.1998
(73) Patentinhaber: Alpha Getriebebau GmbH, D-97999 Igersheim (DE)
(72) Erfinder: BAYER, Thomas, D-97999 Igersheim (DE)
(74) Vertreter: Patentanwalts-Partnerschaft Rotermund + Pfusch
(86) Internationale Anmeldenummer: DE9600530
(87) Internationale Veröffentlichungsnummer: WO9635888

(56) Entgegenhaltungen:
- DE-A- 4 239 331
- DE-A- 4 318 334
- DE-A- 4 325 295
- US-A- 3 453 907

## Beschreibung

Die Erfindung betrifft ein zweistufiges Planetenzahnradgetriebe nach dem Oberbegriff des Patentanspruchs 1.

Solche Planetengetriebe sind beispielsweise bekannt aus DE 43 18 334 A1 und DE 42 39 331 A1.

Von den vorgenannten bekannten Ausführungen ausgehend beschäftigt sich die Erfindung mit dem Problem, derartige Getriebe hinsichtlich ihrer Herstellbarkeit zu vereinfachen, deren Lagersteifigkeit zu verbessern sowie bei diesen ein niedriges Geräuschverhalten zu gewährleisten.

Grundsätzliche Lösungen zu dieser Problemstellung zeigen Getriebeausführungen mit den kennzeichnenden Merkmalen der Ansprüche 1 und 2 auf.

Der wesentliche Vorteil dieser Ausführungen besteht in der Gestaltung des zweiten Umlaufträgers als ein einziges einstückiges Teil. Dadurch wird eine äußerst kippsteife Lagerung des zweiten Umlaufträgers erreicht, da bei einem ins Langsame übersetzenden Getriebe die von der Abtriebseite ausgehenden Kräfte gleichmäßig auf beide den zweiten Umlaufträger in dem Getriebegehäuse abstützende Wälzlager übertragen werden.

Nach Anspruch 3 ist das erste Hohlrad lösbar an dem zweiten Umlaufträger befestigt. Dies hat unter anderem den Vorteil, daß die Innenverzahnung dieses ersten Hohlrades einfach, durch beispielsweise Räumen, hergestellt werden kann und daß insbesondere auch ein getrennter Werkstoff einsetzbar ist.

Bei der Ausführung nach Anspruch 4 liegt das an der Spanneinrichtung gelegene Wälzlager des zweiten Umlaufträgers radial innen gleichzeitig auf dem zweiten Umlaufträger und dem daran befestigten ersten Hohlrad auf. Dadurch wird auf denkbar einfache Weise eine Zentrierung des ersten Hohlrades gegenüber dem zweiten Umlaufträger erreicht.

Bezüglich der Lagerung des ersten Umlaufträgers in dem zweiten Umlaufträger besteht eine vorteilhafte Ausführung nach Anspruch 5 darin, das für diese Lagerung erforderliche Wälzlager durch das erste Hohlrad gegen den zweiten Umlaufträger zu verspannen.

Die Verspannung der Wälzlager des zweiten Umlaufträgers zwischen diesem und dem Getriebegehäuse wird nach Anspruch 6 in einer äußerst zweckmäßigen Weise dadurch erreicht, daß ein auf dem ersten Hohlrad verstellbar gelagerter Spannring für die Lagerverspannung sorgt. Diese Art der Lagerverspannung ist insbesondere für relativ hoch belastete Lager zweckmäßig.

Bei nicht allzu hoch belasteten Lagern erweist sich eine Verspannung nach Anspruch 2 als äußerst vorteilhaft. Nach dieser besteht die Spanneinrichtung aus dem ersten an dem benachbarten Wälzlager anliegenden Hohlrad und einer zwischen einem der Wälzlager und einem Gegenlager eingelegten Spannfeder, die eine Tellerfeder sein kann. Als Haltemittel in der Form eines aufgesetzten Anschlages kann für das vorstehend genannte Wälzlager nach Anspruch 7 das Hohlrad der ersten Stufe dienen.

Ausführungsbeispiele der Erfindung sind in der Zeichnung dargestellt.

Es zeigen
- Fig. 1: einen Längsschnitt durch ein zweistufiges Getriebe mit einer festen Verspannung der Wälzlager zwischen dem zweiten Umlaufträger und dem Getriebegehäuse,
- Fig. 2: eine Ansicht auf die Stirnseite A des Getriebes in Richtung des Pfeiles II,
- Fig. 3: einen Schnitt durch das Getriebe nach Linie III-III,
- Fig. 4: eine alternative Getriebeausführung in der Darstellung nach Fig. 1 mit einer federnden Verspannung der Wälzlager zwischen dem zweiten Umlaufträger und dem Getriebegehäuse,
- Fig. 5: eine Ansicht auf die Stirnseite A des Getriebes in Richtung des Pfeiles V,
- Fig 6: einen Schnitt durch das Getriebe nach Linie VI-VI.

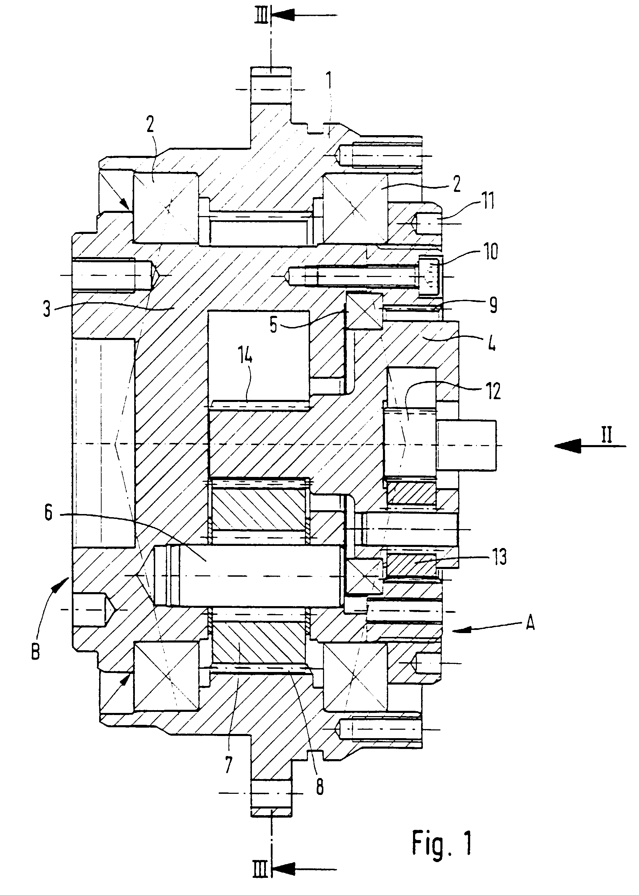

Bei der Ausführung nach Fig. 1 ist in einem Getriebegehäuse 1 über Wälzlager 2 der zweite Umlaufträger 3 eines zweistufigen Planetengetriebes gelagert. Mit ,,zweiter Umlaufträger 3" ist hierbei der Umlaufträger der zweiten Stufe bezeichnet. Der mit "erster Umlaufträger 4" bezeichnete Umlaufträger der ersten Stufe lagert über Wälzlager 5 in dem zweiten Umlaufträger 3. Die Wälzlager 2 der zweiten Stufe sind Radial-Kegelrollenlager und das einzige Wälzlager 5 der ersten Stufe ist ein Radial-Kugellager.

Der zweite Umlaufträger 3 ist aus einem einzigen kompakten Stück gefertigt. In ihm sind auf Planetenradbolzen 6 als zweite Planetenräder 7 bezeichnete Planetenräder gelagert, die in einem in das Getriebegehäuse 1 eingearbeiteten Hohlrad 8 kämmen.

Das Hohlrad 9 der ersten Stufe ist ein über Schrauben 10 an dem zweiten Umlaufträger 3 befestigter Ring. Radial außen auf diesem Ring aufgeschraubt ist ein Spannring 11 zum Verspannen der Wälzlager 2 des zweiten Umlaufträgers 3 der zweiten Stufe innerhalb des Getriebegehäuses 1.

Das der Stirnseite A der ersten Stufe zugewandte Wälzlager 2 liegt radial innen axial etwa je zur Hälfte auf dem zweiten Umlaufträger 3 einerseits und dem ersten Hohlrad 9 andererseits auf. Hierdurch ergibt sich der Vorteil, daß das erste Hohlrad 9 zwangsläufig in dem Innenring des Wälzlagers 2 zentriert ist. Es entfällt damit eine andernfalls erforderliche besondere Zentriereinrichtung.

Das erste Hohlrad 9 dient weiterhin dazu, radial innen das Wälzlager 5 des ersten Umlaufträgers 4 gegen den zweiten Umlaufträger 3 zu spannen.

Bei einem Einsatz des Getriebes als ein ins Langsame übersetzendes Getriebe erfolgt der Antrieb über ein erstes Ritzel 12 der ersten Stufe, das in ersten Planetenrädern 13 der ersten Stufe kämmt, die sich wiederum in dem ersten Hohlrad 9 radial außen abstützen.

Die Kraftübertragung von dem ersten Umlaufträger 4 in die zweite Getriebestufe erfolgt über ein mit dem ersten Umlaufträger 4 fest verbundenes zweites Ritzel 14. Das Wälzlager 5 der ersten Getriebestufe ist als Radial-Kugellager ausgeführt.

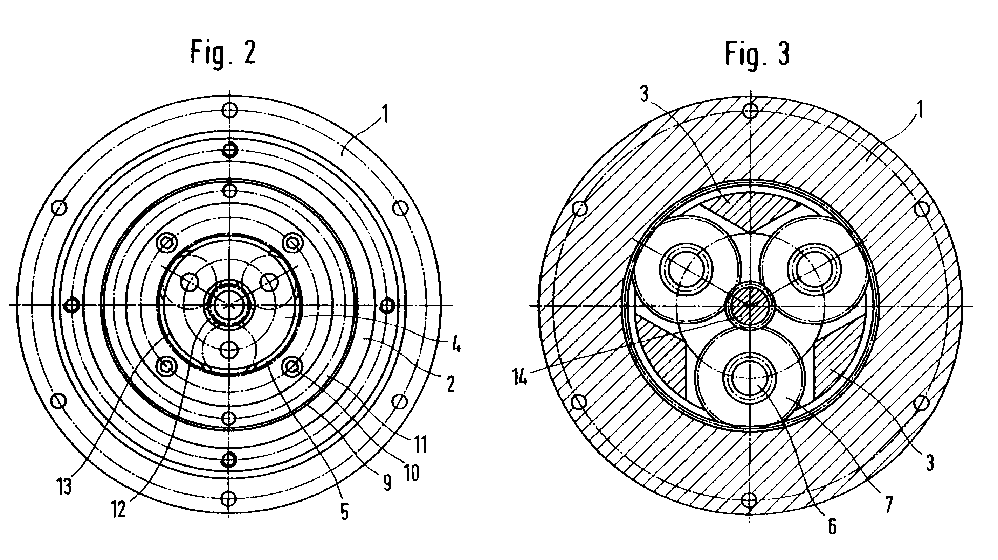

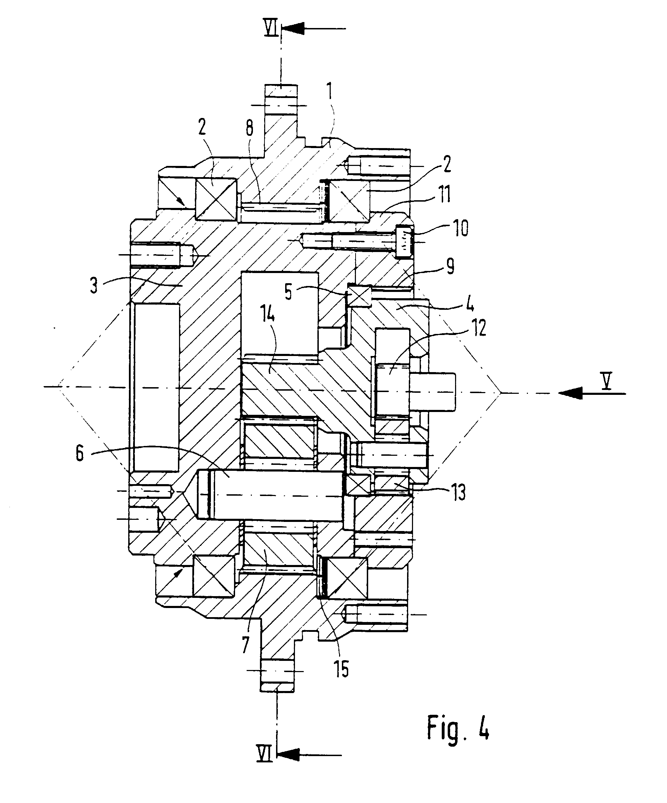

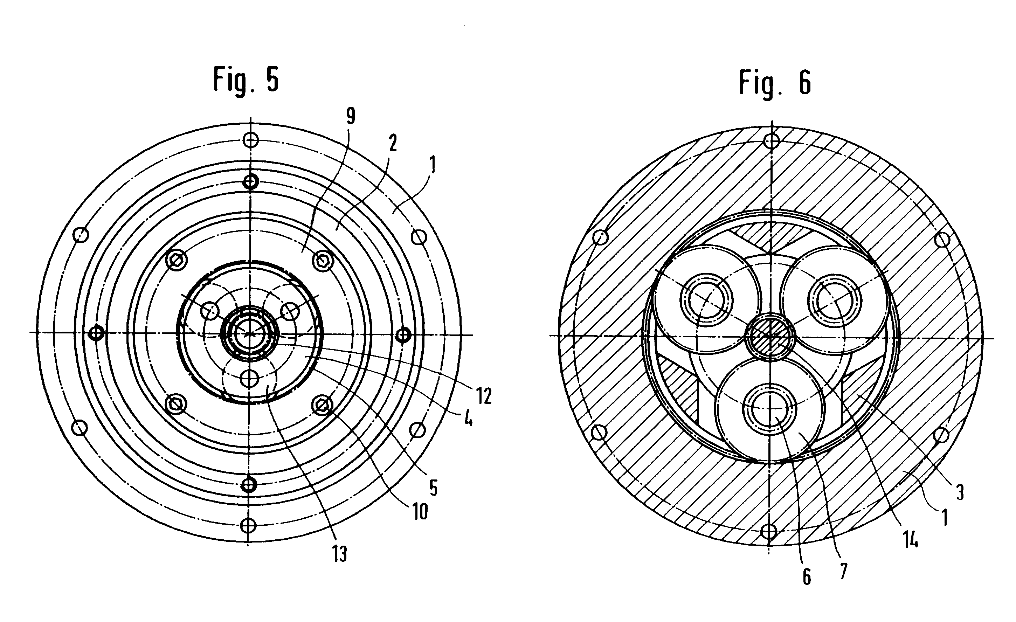

Die Getriebeausführung nach den Fig. 4 - 6 unterscheidet sich von derjenigen nach den Fig. 1 - 3 lediglich dadurch, daß anstelle des Spannringes 11 das Verspannen der Wälzlager 2 zwischen dem zweiten Umlaufträger 3 und dem Getriebegehäuse 1 mit Hilfe einer zwischen einem der Wälzlager 2 und dem Getriebegehäuse 1 eingelegten Tellerfeder 15 erfolgt. Durch diese Tellerfeder 15 ist automatisch eine Vorspannung der Wälzlager 2 gegeben, ohne diese bei der Getriebemontage besonders einstellen zu müssen. Bei der Verwendung beispielsweise einer Tellerfeder 15 kann eine Fixierung durch das an den Innenring des Wälzlagers 2 anliegende erste Hohlrad 9 dadurch erfolgen, daß dieses Hohlrad 9 axial auf Anschlag gegenüber dem zweiten Umlaufträger 3 angezogen wird. Der Anschlag ist dabei so ausgelegt, daß die Tellerfeder 15 sich noch in ihrem elastischen Verformungsbereich zwischen entspannter und gespannter Endlage befindet. Eine solche Verspannung der Wälzlager 2 des zweiten Umlaufträgers ist allerdings auf Getriebeausführungen beschränkt, bei denen die Wälzlager 2 nicht allzu großen Lagerkräften ausgesetzt sind. Die Anwendungsgrenze wird durch die Steifigkeit der einzusetzenden Tellerfedern 15 bestimmt. Dabei sind Tellerfedern lediglich eine Ausführungsform axial wirkender Federn, so daß auch andere Federarten grundsätzlich eingesetzt werden können.

Bei den dargestellten Getriebeausführungen sind die in den zweiten Umlaufträger eingeformten Abtriebsflansche mit genormten Anschlußmaßen versehen.

Die erfindungsgemäße Getriebeausführung besitzt unter anderem den Vorteil, ohne große Veränderung durch Wegfall der ersten Getriebestufe auch als einstufiges Getriebe eingesetzt werden zu können.

## Patentansprüche

1. Zweistufiges Planetenzahnradgetriebe mit einem feststehenden Getriebegehäuse (1), bei dem
- in der ersten Getriebestufe ein erstes Ritzel (12) mit ersten Planetenrädern (13) kämmt, die auf einem ersten drehbar gelagerten Umlaufträger (4) lagernd sitzen,
- die ersten Planetenräder mit einem ersten Hohlrad (9) kämmen, das mit einem in dem Getriebegehäuse gelagerten zweiten Umlaufträger (3) der zweiten Stufe drehfest verbunden ist, welcher zweite Planetenräder (7) drehbar trägt, - die zweiten Planetenräder (7) mit einem zweiten Ritzel (14), das mit dem ersten Umlaufträger (4) drehfest verbunden ist, und einem in das Getriebegehäuse eingearbeiteten zweiten Hohlrad (8) kämmen,
- Antrieb bzw. Abtrieb über das erste Ritzel (12) bzw. den zweiten Umlaufträger (3) erfolgt, wobei das Getriebe ins Langsame übersetzt, und wobei bei vertauschtem An- und Abtrieb das Getriebe ins Schnelle übersetzt,
- der zweite Umlaufträger (3) jeweils seitlich seiner Planetenräder (7) in dem Getriebegehäuse über je ein Wälzlager (2) gelagert ist,
- jedem Wälzlager (2) ein Haltemittel zur axialen Lagesicherung zugeordnet ist, und
- der zweite Umlaufträger (3) mit einem festen Anschlag als Haltemittel versehen ist, an dem das benachbart im Getriebegehäuse sich abstützende eine Wälzlager (2) axial außen anliegt, und mit einem aufgesetzten Anschlag (11) als Haltemittel für das andere Wälzlager (2)
**dadurch gekennzeichnet,**
- daß der zweite Umlaufträger (3) als einstückiges Teil gefertigt ist, und
- daß als aufgesetzter Anschlag ein aufschraubbarer Spannring (11) vorgesehen ist, der auf das andere Wälzlager (2) axial außen einwirkt, um beide Wälzlager (2) zueinander zu verspannen.

2. Zweistufiges Planetenzahnradgetriebe mit den Merkmalen des Oberbegriffs des Anspruchs 1,
**dadurch gekennzeichnet,**
- daß der zweite Umlaufträger (3) als einstückiges Teil gefertigt ist,
- daß das andere Wälzlager (2) axial außen an dem aufgesetzten Anschlag (11) anliegt, und
- daß zwischen dem Getriebegehäuse und dem anderen Wälzlager (2) an dem aufgesetzten Anschlag (11) eine Spannfeder (15) eingelegt ist, mit der die beiden Wälzlager (2) in Richtung ihrer Anschläge verspannt werden.

3. Planetengetriebe nach Anspruch 1 oder 2,
**dadurch gekennzeichnet**,
daß die Verbindung des ersten Hohlrades (9) mit dem zweiten Umlaufträger (3) lösbar ist.

4. Planetengetriebe nach einem der vorhergehenden Ansprüche.
**dadurch gekennzeichnet**,
daß das an den Spannring (11) bzw. der Spannfeder (15) gelegene Wälzlager (2) des zweiten Umlaufträgers (3) radial innen gleichzeitig auf dem zweiten Umlaufträger (3) und dem daran befestigten ersten Hohlrad (9) aufliegt.

5. Planetengetriebe nach einem der vorhergehenden Ansprüche.
**dadurch gekennzeichnet**,
daß der erste Umlaufträger (4) in dem zweiten Umlaufträger (3) durch ein Wälzlager (5) gelagert ist, wobei dieses Wälzlager (5) durch das erste Hohlrad (9) gegen den zweiten Umlaufträger (3) verspannt ist.

6. Planetengetriebe nach Anspruch 1 oder einem der auf diesen rückbezogenen Ansprüche 3 bis 5,
**dadurch gekennzeichnet**,
daß der Spannring (11) für die Wälzlager (2) des zweiten Umlaufträgers (3) auf dem ersten Hohlrad (9) verstellbar angreift.

7. Planetengetriebe nach Anspruch 2 oder einem der auf diesen rückbezogenen Ansprüche 3 bis 5,
**dadurch gekennzeichnet**,
daß der aufgesetzte Anschlag (11) von dem Hohlrad (9) der erste Stufe gebildet ist.

8. Planetengetriebe nach Anspruch 2 oder einem der auf diesen rückbezogenen Ansprüche,
**dadurch gekennzeichnet**,
daß die Spannfeder eine Tellerfeder (15) ist.

## Claims

1. Two-stage planetary gear unit with a fixed gear case (1), in which
- in the first gear stage, a first pinion (12) meshes with first planet wheels (13) which are seated on a first, rotatably mounted planet carrier (4),
- the first planet wheels mesh with a first internal gear (9), which is connected in a manner fixed against relative rotation to a second-stage planet carrier (3) which is mounted in the gear case and carries two planet wheels (7) in a rotatable manner, - the second planet wheels (7) mesh with a second pinion (14), which is connected in a manner fixed against relative rotation to the first planet carrier (4), and with a second internal gear (8), which is machined into the gear case,
- input and output are performed via the first pinion (12) and the second planet carrier (3) respectively, the gear unit performing a speed reduction, and the gear unit performing a speed increase when the input and output are switched round,
- the second planet carrier (3) is supported in the gear case via respective rolling-contact bearings (2) to the side of its planet wheels (7),
- each rolling-contact bearing (2) is assigned a holding means for securing the axial position, and
- the second planet carrier (3) is provided with a fixed stop as holding means, on which one rolling-contact bearing (2), which is supported adjacent thereto in the gear case, rests axially at the outside, and with a mounted-on stop (11) as holding means for the other rolling-contact bearing (1),
characterized
- in that the second planet carrier (3) is manufactured as a one-piece component, and
- in that a clamping ring (11) which can be screwed on is provided as the mounted-on stop, this clamping ring acting on the other rolling-contact bearing (2) axially at the outside in order to brace the two rolling-contact bearings (2) relative to one another.

2. Two-stage planetary gear unit with the features of the precharacterizing clause of Claim 1,
characterized
- in that the second planet carrier (3) is manufactured as a one-piece component,
- in that the other rolling-contact bearing (2) rests axially at the outside on the mounted-on stop (11), and
- a clamping spring (15), by means of which the two rolling-contact bearings (2) are braced in the direction of their stops, is inserted between the gear case and the other rolling-contact bearing (2), on the mounted-on stop (11).

3. Planetary gear unit according to Claim 1 or 2, characterized in that the connection of the first internal gear (9) to the second planetary carrier (3) is releasable.

4. Planetary gear unit according to one of the preceding claims, characterized in that the rolling-contact bearing (2) of the second planet carrier (3), the said rolling-contact bearing being laid against the clamping ring (11) or clamping spring (15), simultaneously rests, radially to the inside, on the second planet carrier (3) and the first internal gear (9) secured on the latter.

5. Planetary gear unit according to one of the preceding claims, characterized in that the first planet carrier (4) is supported in the second planet carrier (3) by a rolling-contact bearing (5), this rolling-contact bearing (5) being braced against the second planet carrier (3) by the first internal gear (9).

6. Planetary gear unit according to Claim 1 or one of Claims 3 to 5, which refer back to the latter, characterized in that the clamping ring (11) for the rolling-contact bearings (2) of the second planet carrier (3) engages adjustably on the first internal gear (9).

7. Planetary gear unit according to Claim 2 or one of Claims 3 to 5, which refer back to the latter, characterized in that the mounted-on stop (11) is formed by the internal gear (9) of the first stage.

8. Planetary gear unit according to Claim 2 or one of the claims which refer back to the latter, characterized in that the clamping spring is a Belleville spring (15).

## Revendications

1. Boîte à satellites planétaires à deux étages avec un carter de boîte (1) fixe, dans laquelle
- dans le premier étage de la boîte un premier pignon (12) s'engrène dans les premiers satellites planétaires (13), qui sont logés sur un premier porte-satellites (4) monté en rotation,
- les premiers satellites planétaires s'engrènent dans une première couronne (9), qui est reliée, sans pouvoir tourner, à un second porte-satellites (3) du second étage monté dans le carter de boîte, lequel second porte-satellites porte en rotation les seconds satellites planétaires (7),
- les seconds satellites planétaires (7) s'engrènent dans un second pignon (14), qui est relié, sans pouvoir tourner, au premier porte-satellites (4), et dans une seconde couronne (8) formée dans le carter de boîte,
- l'entrée ou la sortie a lieu respectivement par l'intermédiaire du premier pignon (12) ou du second porte-satellites (3), la boîte démultipliant les forces et, par permutation de l'entrée et de la sortie, la boîte multipliant les forces,
- le second porte-satellites (3) est monté dans le carter de boîte toujours latéralement à ses satellites planétaires (7) à chaque fois par l'intermédiaire d'un palier à rouleaux (2),
- à chaque palier à rouleaux (2) est associé un moyen de retenue pour le blocage axial en position, et
- le second porte-satellites (3) est équipé d'une butée fixe en tant que moyen de retenue, contre laquelle le palier à rouleaux (2) s'appuyant à proximité dans le carter de boîte repose axialement à l'extérieur, et d'une butée (11) rapportée servant de moyen de retenue pour l'autre palier à rouleaux (2)
caractérisée en ce que
- le second porte-satellites (3) est fabriqué sous la forme d'une pièce d'un seul tenant, et
- comme butée rapportée, il est prévu une bague de serrage (11) vissable, qui agit axialement à l'extérieur sur l'autre palier à rouleaux (2), pour serrer les deux paliers à rouleaux (2) l'un par rapport à l'autre.

2. Boîte à satellites planétaires à deux étages avec les caractéristiques du préambule de la revendication 1,
caractérisée en ce que
- le second porte-satellites (3) est fabriqué sous la forme d'une pièce d'un seul tenant,
- l'autre palier à rouleaux (2) repose axialement à l'extérieur contre la butée rapportée (11), et
- entre le carter de boîte et l'autre palier à rouleaux (2), un ressort de tension (15) est placé contre la butée rapportée (11), avec lequel les deux paliers à rouleaux (2) sont bridés dans la direction de leurs butées.

3. Boîte à satellites planétaires selon la revendication 1 ou 2, caractérisée en ce que la liaison entre la première couronne (9) et le second porte-satellites (3) est amovible.

4. Boîte à satellites planétaires selon l'une des revendications précédentes, caractérisée en ce que le palier à rouleaux (2) du second porte-satellites (3) placé contre la bague de serrage (11) ou le ressort de tension (15) repose radialement à l'intérieur en même temps sur le second porte-satellites (3) et sur la première couronne (9) fixée sur ce dernier.

5. Boîte à satellites planétaires selon l'une des revendications précédentes, caractérisée en ce que le premier porte-satellites (4) est monté dans le second porte-satellites (3) par un palier à rouleaux (5), ce palier à rouleaux (5) étant serré par la première couronne (9) contre le second porte-satellites (3).

6. Boîte à satellites planétaires selon la revendication 1 ou l'une des revendications 3 à 5 s'y référant, caractérisée en ce que la bague de serrage (11) pour les paliers à rouleaux (2) du second porte-satellites (3) s'engage de manière réglable sur la première couronne (9).

7. Boîte à satellites planétaires selon la revendication 2 ou l'une des revendications 3 à 5 s'y référant, caractérisée en ce que la butée rapportée (11) est formée par la couronne (9) du premier étage.

8. Boîte à satellites planétaires selon la revendication 2 ou l'une des revendications s'y référant, caractérisée en ce que le ressort de tension est une rondelle-ressort (15).
